(19) Europäisches Patentamt
European Patent Office
Office européen des brevets

(11) **EP 4 432 164 A1**

(12) **EUROPEAN PATENT APPLICATION**

(43) Date of publication:
**18.09.2024   Bulletin 2024/38**

(21) Application number: **23162194.7**

(22) Date of filing: **15.03.2023**

(51) International Patent Classification (IPC):
**G06N 3/045** (2023.01)    **G06N 3/084** (2023.01)
**G06N 3/09** (2023.01)    **G06N 3/096** (2023.01)
**G06N 3/094** (2023.01)

(52) Cooperative Patent Classification (CPC):
**G06N 3/045; G06N 3/084; G06N 3/09; G06N 3/094; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NavInfo Europe B.V.**
**5657 DB Eindhoven (NL)**

(72) Inventors:
• **JEEVESWARAN, Kishaan**
  **5657 DB Eindhoven (NL)**

• **BHAT, Prashant Shivaram**
  **5657 DB Eindhoven (NL)**
• **ARANI, Elahe**
  **5657 DB Eindhoven (NL)**
• **ZONOOZ, Bahram**
  **5657 DB Eindhoven (NL)**

(74) Representative: **van Breda, Jacobus**
**Octrooibureau Los & Stigter B.V.**
**P.O. Box 20052**
**1000 HB Amsterdam (NL)**

(54) **A COMPUTER-IMPLEMENTED METHOD FOR DOMAIN INCREMENTAL CONTINUAL LEARNING IN AN ARTIFICIAL NEURAL NETWORK USING MAXIMUM DISCREPANCY LOSS TO COUNTERACT REPRESENTATION DRIFT**

(57)    A computer-implemented method for training a continual learning artificial neural network model, for sequential tasks, comprising an encoder and two classifiers,

wherein the model is trained on a plurality sequential tasks, with visual data being received from a vehicle mounted camera becoming increasingly available over time, wherein during each task, the model is presented with task-specific samples of the data and corresponding labels are drawn from a distribution,

the method comprises adjusting the model on one task at a time and wherein inference is performed on all tasks previously encountered by said model, and wherein the method uses discrepancy loss between the two classifiers to regulate encoder and classifier weights adjustment so that the model adapts a representation cluster of samples from new tasks according to the clusters of previously learned tasks such that the model is suitable for a domain incremental learning scenario, where tasks have shifting input distributions while the labels and/or classes remain the same.

Fig. 1

**Description**

## BACKGROUND

Artificial intelligence and deep learning research has led to the development of deep neural networks (DNNs) that exhibit impressive performance in a variety of domains [1, 2, 3, 11]. While most deep learning studies focus on training an artificial neural network, also known as a model, on a single, fixed dataset drawn from the same distribution [4], continual learning [31, 32, 19] investigates the ability of DNNs to adapt to data from new distributions while still retaining knowledge gained from previous data (consolidation) [5, 6, 7, 8]. This is particularly important for applications such as robotics and autonomous driving [35], where the ability to continuously learn, adapt, and make decisions is crucial. In an ideal continual learning scenario, a model should be able to learn from data representing new tasks (such as new domains or classes) without forgetting what it has learned from previous tasks.

Catastrophic forgetting is the fundamental problem in continual learning, in which a model becomes an expert on data from a new task and forgets important information learned from previous tasks. This occurs when the learning algorithm overwrites weights that are important for old tasks while learning new tasks [7]. Despite progress in this research area, implementing an approach to continually learn an accurate model that performs well on previously seen classes without suffering from catastrophic forgetting remains an open research problem.

Continual Learning (CL) has gained significant attention in recent years due to its potential applications in fields such as autonomous driving and robotics. Deep neural networks (DNNs) are typically designed to incrementally adapt to stationary, independent and identically distributed (i.i.d.) data streams that are presented in isolation and in random order [12]. However, learning sequentially from non-i.i.d. data can result in catastrophic forgetting of previous tasks and overfitting to the current task [20]. Van de Ven & Tolias [20] discuss three scenarios in which a DNN can learn from a data stream: class-incremental, domain-incremental, and task-incremental. In the class-incremental scenario, the model must distinguish between different tasks and different classes within a task during inference. The task-incremental scenario relaxes this requirement by providing the task ID at inference time, and the model must only differentiate between classes within a single task. In the domain-incremental scenario, the distribution of the input data changes in each task (e.g., samples may be rotated to different degrees), but the classes remain the same. Approaches to addressing catastrophic forgetting can be broadly divided into three categories: regularization-based approaches [9, 13, 14], which penalize changes to important parameters related to previous tasks; parameter-isolation methods [15, 22, 4, 23], which allocate a distinct set of parameters for each task; and rehearsal-based approaches [10, 17, 18, 19, 31, 32], which store old task samples and replay them alongside current task samples. In line with regularization-based approaches, other lines of research have studied learning weights for new tasks orthogonally to the subspace spanned by previous task inputs [24]. Both of these approaches can be seen as ways to protect the weights, and therefore the representations, learned for previous tasks from interference while learning new tasks.

Domain incremental learning is a continual learning scenario which involves a model learning from a sequence of datasets, each drawn from a different distribution or "domain" [20]. In this scenario, the class distribution of the samples remains constant, but the input-distribution keeps changing in every task. For example, consider a deep learning model trained to detect different traffic-signs. Initially, the model is trained on a dataset of images of traffic-signs in Germany. This is the first domain. Later, the model is presented with a new dataset of images of traffic-signs in the US. Ideally, the model must be able to adapt to this new domain (traffic-signs in the US) while still retaining knowledge learned from the previous domain (traffic-signs in Germany). This presents a challenge because the model must be able to recognize the difference between the two domains and adjust its behavior accordingly. In this example, the model should be able to distinguish between the features that are relevant for classifying the signs in Germany and the features that are relevant for classifying the signs in the US (with different colors or shapes).

Various approaches to address the issue of catastrophic forgetting in neural networks are known. In catastrophic forgetting a model forgets important information learned from past tasks while learning new tasks. As a result, the model is rendered unable to perform previously learnt tasks, such as recognizing a particular traffic sign. This forgetting occurs due to the learning algorithm overwriting those weights of the model that are important for previously known tasks while updating the network to learn said new task.

The before mentioned may be the result of a model having become overly focused on the new task samples [16], relying on mostly recent and newly acquired examples in a limited capacity memory, also known as a memory buffer. Experience replay has been found to help mitigate catastrophic forgetting in continual learning in such cases, wherein a small percentage of old task samples are stored in a buffer and interleaved with the current task samples while learning the new tasks [6]. Though experience replay has been shown to effectively mitigate catastrophic forgetting, it does not explicitly address the drift in representations at task boundaries caused by the disruption of clustered representations corresponding to classes in the previously learned tasks [21].

It is, for the sake of completeness, noted that representation drift occurs when the weights of a neural network are overwritten while learning a new task. These weights encode information about the task that the network has been trained on, and when the distribution of the data changes (as in domain incremental learning), the weights are adapted to learn about the new task, potentially altering the representations for older tasks. One potential solution for addressing representation drift in continual learning is to learn general representations in the model backbone, which may help adapt the representation space of the input gradually across different distributions.

In recent years, representation drift in continual learning has received significant attention from researchers. ER-AML and ER-ACE [21] analyze representation drift of old task samples at the task boundary when learning a new task, and propose an asymmetric cross entropy loss (ER-ACE) and a metric learning based loss (ER-AML) to learn new task samples separately from buffered samples. By explicitly guiding the model to learn contrastive features for samples of different classes, the metric learning loss in ER-AML helps the model to learn to cluster the representations of the new task samples away from the representation space of old tasks. Thus, it avoids any disruption to the representation of the old tasks. [25] study the change in representations using a linear probing technique by training a classifier on a frozen backbone. They demonstrate that contrastive loss-based learning provides a good balance between stability and plasticity. Though these approaches harness the benefits of contrastive loss to cluster the representations of different tasks separately, they are not tailored for domain incremental learning and they often rely on the quality of so called negative samples in every batch and strong augmentations to improve the performance. The person skilled in the art will understand that a batch here refers to a set of samples used during training of a model and that a negative sample is a sample that is labeled as not belonging to a certain class or category in a supervised learning task.

In summary, in artificial neural networks, it is considered ideal for learned representations of similar classes to be clustered together in every task. However, the representation clusters learned in previous tasks often drift when learning new classes, which can significantly contribute to catastrophic forgetting of old tasks. To address this issue, various approaches have been proposed in the literature on continual learning. For example, ER-AML [21] suggest learning new samples from the incoming stream separately from old samples in the buffer using separate loss functions. However, this approach requires specialized data augmentations, that is to say treating it as a hyperparameter to search, and quality negative samples in order to incorporate their proposed SSL loss. As such, the known methods of mitigating critical forgetting can be suboptimal. The person skilled in the art would understand, in the context of the ER-AML method, negative samples would refer to samples from the incoming data stream that are not labeled as belonging to the same class as the samples in the buffer, and are learned separately using a different loss function.

Domain adaptation strategies seek to learn the representation of a target data and improve the performance on it based on the knowledge learned from a labelled source data. [26] propose a dual-classifier approach to detect OOD samples wherein the training consists of alternating between IID training using CE loss and maximizing the entropy between the two classifiers for unlabeled dataset of OOD samples. The OOD samples are detected whenever the classifiers disagree the most in their predictions. [27] propose a dual-classifier setup for domain adaptation wherein the training cycles between maximizing the discrepancy between the classifiers for samples from the target distribution and minimizing the discrepancy for the same by learning the feature extractor to extract representations such that the classifiers project them to same vector. In essence, the model learns to adapt the representations of the target domain in the feature space of the source domain. In line of utilizing dual-classifier, [28] proposes a causality-inspired framework for domain adaptation to learn domain independent representations in the encoder and learning the dual classifiers on complementary features using an adversarial mask.

Despite some previous works in the literature seeking to mitigate representation drift by employing separate loss functions and contrastive loss [21], none of the known works are tailored for domain incremental learning and they fail to explicitly control the representation space learned in the model.

For the purpose of providing explicit definitions, the following terms may be defined as follows:

- deep neural networks (DNNs): a type of artificial neural network with multiple layers, often used in deep learning applications
- continual learning: the ability of a model to adapt to new data while retaining knowledge learned from previous data
- catastrophic forgetting: the problem in continual learning where a model forgets important information learned from previous tasks while learning new tasks
- class-incremental scenario: a scenario in which the model must distinguish between different tasks and different classes within a task during inference
- task-incremental scenario: a scenario in which the model must only differentiate between classes within a single task, with the task ID provided at inference time
- domain-incremental scenario: a scenario in which the distribution of the input data changes in each task, but the classes remain the same
- regularization-based approaches: approaches to addressing catastrophic forgetting that penalize changes to important parameters related to previous tasks
- parameter-isolation methods: approaches to addressing catastrophic forgetting that allocate a distinct set of parameters for each task

- rehearsal-based approaches: approaches to addressing catastrophic forgetting that store old task samples and replay them alongside current task samples.

## SUMMARY OF THE INVENTION

The present invention aims to enable the learning of continually learning models in an efficient manner through the use of unsupervised domain adaptation in the process of continual learning. To this end the present invention proposes leveraging the benefits of the so called 'maximum discrepancy loss' in domain adaptation to provide a solution for effectively mitigating catastrophic forgetting in domain-incremental continual learning.

That is to say the invention proposes a computer-implemented method for domain incremental continual learning in an artificial neural network architecture, wherein said artificial neural network architecture, also referred to as a model, is trained using image data from a camera mounted to a driving vehicle such as an autonomous driving vehicle, and wherein said architecture comprises a memory buffer for holding previous task samples; an encoder; and two classifiers, wherein the method comprises processing the image data to representations using said encoder; projecting the representations from the encoder to class distribution using the two classifiers; and counteracting representation drift in said artificial neural network architecture in continual learning using maximum discrepancy loss between the two classifiers.

It can also be said that the invention is a computer-implemented method for training a continual learning model for sequential tasks, comprising an encoder and two classifiers. The model is trained on a plurality sequential tasks, with visual data being received from a vehicle mounted camera becoming increasingly available over time. During each task, the model is presented with task-specific samples and corresponding labels drawn from a distribution. The model is optimized on one task at a time and inference is performed on all thus far encountered tasks. The continual learning model is designed to handle a domain incremental learning scenario, where tasks have shifting input distributions while the classes and/or labels remain the same. To this end the method uses of a maximum discrepancy loss between the two classifiers to regulate the encoder so that it adapts a representation cluster of samples from new tasks according to the clusters of previously learned tasks.

"Sequential tasks" refer to a series of tasks in which the model is trained to learn new information while retaining knowledge from previous tasks.

"Task-specific samples" refer to a subset of the data that is specific to a particular task and used to train the model on that task.

"Visual data" is obtained from a camera mounted on an autonomous driving vehicle. The data may be preprocessed to remove noise and resize the images to a consistent size before being input to the model.

"Representation cluster of samples" may be determined by the encoder's output and used to adjust the model's parameters by minimizing the discrepancy loss between the two classifiers.

The following options are combinable with any of the above.

Optionally, the method may comprise the use of a loss based on metric learning so that the model learns to recognize features within the image data that generalize across mutually different domains.

The method may also include employing a maximum discrepancy loss to mitigate representation drift and a loss based on metric learning to learn features that generalize across mutually different domains, such as traffic signs in mutually different geographical areas, such as mutually different countries. The model may optionally be optimized on one task at a time for mutually different domains, wherein inference is performed on all encountered tasks. The step of optimizing comprises keeping the weights of the encoder and two classifiers within a predefined range from the value of said weights as learned on previous task samples in said memory buffer. To further enhance performance, the method may involve tightening decision boundaries around the previous task samples such that there is increased, such as maximized, disagreement between the two classifiers on the classification of new samples by adjusting the weights of the classifiers while fixing the weights of the encoder. Additionally, the method may reduce, such as minimize, the discrepancy between predictions of the model by fixing the weights of the classifiers and adjusting the weights of the encoder such that the two classifiers agree on their so called vector outputs. A vector output of a classifier is a mathematical representation of the predicted class label for a given input data to the corresponding classifier.

It should be understood that a data processing apparatus could be considered, wherein said apparatus would comprise means for carrying out the before mentioned. These means could comprise any of the following:

  a central processing unit (CPU) and/or graphics processing unit (GPU) to handle the computation-intensive tasks of training and updating the neural network model;
  a memory to store previous task samples, as well as the neural network model's parameters and intermediate results, possibly even a high-speed storage device, such as a solid-state drive (SSD), to store and quickly access the previous task samples and the neural network model;
  a camera, LIDAR or other visual sensor to capture input data from the autonomous driving vehicle;
  a network interface card (NIC) or other communication device to transfer data between the computer and other components of the autonomous vehicle.

The means could even comprise GPS or other sensors, to help determine the task identity and provide context information to the model. It should be noted that the specific hardware configuration will depend on the specific requirements of the problem, and the above list is not exhaustive.

To this end a computer program product comprising instructions which, when the program is executed by a computer, may be provided to cause the computer to carry out the method as described. The invention may be used in an at least partially, preferably fully, autonomous driving system comprising at least one camera designed for providing a feed of image data, and a computer preprogrammed for implementing the method.

## DETAILED DESCRIPTION

The continual learning paradigm typically involves a sequence of tasks, or sequential domains in domain incremental learning (domain-IL), where data becomes increasingly available over time. As the model encounters each task, it is presented with task-specific samples and corresponding labels, drawn from the task's distribution.

Assuming the model consists of a feature extractor (also known as an encoder), which projects input samples to representations, and two classifiers, which project the representations to a vector of size defined by number of classes, the entire model is optimized on one task at a time and inference is performed on all tasks encountered thus far.

Projecting representations to a vector of a size defined by the number of classes in the domain-incremental learning refers to the process of transforming the input data into a so called feature space that is suitable for the two classifiers. A feature space is a mathematical space where the input data points are mapped or represented. Each feature of the input data corresponds to a dimension in the feature space, where the position of a data point in the feature space represents its characteristics or properties. The goal of this mapping is to bring the input data into a format that is suitable for a learning algorithm to operate on, and in a way that captures the underlying structure of the data. The feature space may be chosen to be of lower dimension than the original input space to make the problem more manageable, or to emphasize certain characteristics of the data.

The proposed method is designed to solve a specific scenario, referred to as the domain-IL scenario. In this scenario, tasks are characterized by shifting input distributions while the classes or labels remain the same. A prime example of such a scenario would be autonomous driving vehicles that are trained to detect other vehicles, pedestrians, and traffic signs in one country, and are expected to perform equally well in other countries.

An ideal continual learning model in this scenario would be able to gradually learn to predict on new distributions of input samples, while not losing its knowledge of the initial tasks or domains.

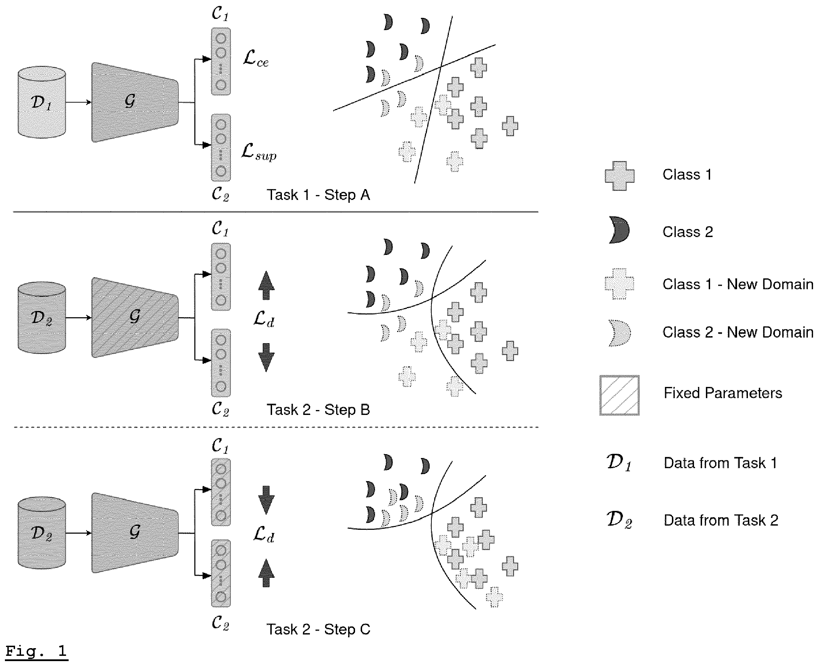

Figure 1 shows a proposed methodology for assimilating new task knowledge while preserving representations from previous tasks that involves incorporating a maximum discrepancy loss into a continual learning framework. This regulates the backbone of the model so that it adapts the representation cluster of samples from new tasks according to the clusters of previously learned tasks, rather than exacerbating catastrophic forgetting by adapting the previously learned tasks to the new task. As illustrated in Figure 1, the model includes an encoder (g) that processes input images to generate meaningful representations, as well as dual classifiers (c1, c2) that project the encoder's representations to class distributions. The samples from the first task are learned using a combination of cross-entropy loss in the first classifier (c1) and supervised contrastive loss (as represented in Equation 1) in the second classifier ($C_2$). In Equation 1 however, the first and second classifiers are f1 and f2 respectively.

$$\mathcal{L}_1 \triangleq \mathop{\mathbb{E}}_{(x_i, y_i) \sim \mathcal{D}_t} \left[ \mathcal{L}_{ce}(f_1(g(x_i)), y_i) + \mathcal{L}_{sup}(f_2(g(x_i)), y_i) \right], \tag{1}$$

In Equation 1 Dt is a current task data distribution, $L_{sup}$ is the supervised contrastive loss and $L_{ce}$ is the cross-entropy loss. We employ supervised contrastive loss in the second classifier to harness its benefits of learning features that are generalizable across different tasks/domains. Whenever the term distribution is used it should be understood that such distribution refers to a task data distribution.

Experience replay is a technique that aims to mitigate the issue of catastrophic forgetting in machine learning. This is achieved by storing samples from past tasks in a limited memory buffer and replaying them later during the training process. To accomplish this, a reservoir sampling strategy is employed throughout the training process to randomly select and store samples from the current task. This allows the samples in the memory buffer to be interleaved with the training samples during the continual learning process, which helps to mitigate forgetting.

The training process can be broken down into several steps. After learning on Task 1, the process cycles through Step B, Step C, and Step A. Step B involves using a discrepancy loss on the L2-normalized logits predicted by two classifiers, f1 and f2, while keeping the parameters of the encoder, also known as the backbone, fixed. The discrepancy loss is used to quantify the difference between the distribution of pairwise distances of the classifier outputs, f1(g(X)) and f2(g(X)).

To calculate the discrepancy loss, pairwise distances between the logits predicted by classifier f1 for a batch of input samples X are defined as d1. Similarly, pairwise distances between the logits predicted by classifier f2 are defined as d2. The similarity metrics of these distances can be modeled as normal distributions, with constants c1 and c2, means of μ1 and μ2, and standard deviations of σ1 and σ2. The discrepancy loss can then be written as the difference between these two normal distributions, as shown in Equation 2.

$$\mathcal{L}_2 \triangleq \mathop{\mathbb{E}}_{\mathcal{X} \sim D_t} p(d_1) \log q(d_2) - (1 - p(d_1)) \log(1 - q(d_2)) \tag{2}$$

In Equation 2 let d1 be the pairwise distance between the logits predicted by classifier f1 for a batch of input samples X , such that:

$$d_1 = \|f_1(g(x_i) - f_1(g(x_j)\|,$$

Here $\|.\|$ denotes Euclidean distance, xi, xj 6 X and i / = j. Similarly, let d2 be the pairwise distance between the logits predicted by the classifier f2. The similarity metrics p(d1) and q(d2) can be modelled as a normal distribution, such that:

$$p(d_1) = C_1 \frac{1}{\sigma_1 \sqrt{2\pi}} exp \left[ -\frac{1}{2} \frac{(d_1 - \mu_1)^2}{\sigma_1^2} \right],$$

Here c1 is a constant and μ1 = 0, and σ1 = 1/2. similarly, let q(d2) be the distribution of pairwise distances predicted by the second classifier. The discrepancy loss between the classifiers can be written as shown in Equation 2.

As depicted in Figure 1, Step B aims to sharpen the decision boundaries around the samples from the previous task by encouraging the classifiers f1 and f2 to have different predictions for samples from the new task. During the maximization step, multiple types of losses are applied to the classifiers to ensure stability in training and prevent the weights from being entirely overwritten by new task information. These include a cross-entropy loss on f1, a supervised contrastive loss on f2, and a consistency loss, also known as knowledge distillation, that is based on the logits predicted by both f1 and f2 on the buffered samples. That is to say, consistency loss is applied only to samples already present in the buffer memory. These losses are combined, as represented in Equation 3 below, to maintain the stability and preservation of the previously learned task during the new task learning.

$$\mathcal{L}_3 \triangleq \mathop{\mathbb{E}}_{(x_i, y_i) \sim D_m} \left[ \alpha \|(f_1'(g(x_i))) - (f_1(g(x_i)))\|_2 + \alpha \|(f_2'(g(x_i))) - (f_2(g(x_i)))\|_2 \right. \\ \left. + \mathcal{L}_{ce}(f_1(g(x_i)), y_i) + \mathcal{L}_{sup}(f_2(g(x_i)), y_i) \right], \tag{3}$$

In Equation 3, f'1 (g(xi)) and f'2 (g(xi)) represent the logits predicted by the corresponding classifiers while learning the task that the samples xi belong to. α is a weighting parameter that controls the balance between different types of losses. The consistency loss ensures that the weights of the network stay close to the optimal solution found for the previous task samples stored in the memory buffer.

Step C aims to teach the encoder to extract representations of the new task samples that are consistent with the representations learned for previous tasks. This is done by freezing the parameters, that is to say weights, of the classifiers and training the encoder to predict representations in such a way that the two classifiers produce similar predictions. By minimizing the discrepancy between the predictions of the classifiers, the encoder g is able to extract task-invariant representations and reduce catastrophic forgetting.

The corresponding minimization loss for discrepancy between f1 and f2 is as shown in Equation 4:

$$\mathcal{L}_4 \triangleq \mathop{\mathbb{E}}_{\mathcal{X} \sim D_t} -p(d_1) \log q(d_2) - (1 - p(d_1)) \log(1 - q(d_2)) \tag{4}$$

Step B and C can be seen as a form of adversarial learning, where the classifiers f1 and f2 are trained to distinguish between samples from the new task and samples from the previous tasks by maximizing the discrepancy between the two classifiers. The encoder g, on the other hand, is trained to "fool" the classifiers by producing representations that minimize this discrepancy. As the model learns new tasks, the representations of the new-task samples are adapted with respect to the ones learned from previous tasks, rather than the other way around. This approach reduces catastrophic forgetting, as the representations of the previous task samples are not updated with large gradient updates caused by the new task samples, which would otherwise result in catastrophic forgetting.

After step C, the training process proceeds to step A again. In this step, the feature encoder and the two classifiers are trained to more accurately predict the class labels for the new task samples. Additionally, a consistency loss is applied to the stored samples in the buffer to further solidify the knowledge of past tasks. This enforces that the previous task knowledge is not forgotten while learning new task.

The loss employed in this step A is given in Equation 5:

$$\mathcal{L}_5 \triangleq \underset{(x_i,y_i)\sim\mathcal{D}_t}{\mathbb{E}} \mathcal{L}_{ce}(f_1(g(x_i)), y_i) + \mathcal{L}_{sup}(f_2(g(x_i)), y_i)$$
$$\underset{(x_j,y_j)\sim\mathcal{D}_m}{\mathbb{E}} \left[ \mathcal{L}_{ce}(f_1(g(x_j)), y_j) + \mathcal{L}_{sup}(f_2(g(x_j)), y_j) + \alpha\|(f_{1',2'}(g(x_j))) - (f_{1,2}(g(x_j)))\|_2 \right], \quad (5)$$

In Equation 5 f1' ,2' and f1,2 denote the application of loss on the output of both the classifiers for the buffered samples.

A coding for executing said method steps for continually learning new tasks is as follows:

```
input:   Data streams $\mathcal{D}_t \forall \{t = 1, ..., T\}$,
         model with a backbone and two classifiers $f_1(g(.)), f_2(g(.))$ with
         parameters $\theta$, reservoir buffer $\mathcal{M} = \{\}$
 1: for all tasks $t \in \{1, 2, .., T\}$ do
 2:     if $t = 1$ then
 3:         for minibatch $(X_t, Y_t) \in \mathcal{D}_t$ do
 4:             $Z_{\theta 1}, Z_{\theta 2} = f(X; \theta)$
 5:             Compute $\mathcal{L}_1$    ▷ Cross entropy loss and supervised contrastive loss
 6:             Update network weights $\theta$
 7:     else
 8:         for minibatch $(X_t, Y_t) \in \mathcal{D}_t$ do                              ▷ Step B
 9:             Freeze the encoder of the model $f(., \theta)$
10:             $Z_{\theta 1}, Z_{\theta 2} = f(X; \theta)$
11:             Compute discrepancy loss $\mathcal{L}_2$
12:             Sample a minibatch $(X', Y') \in \mathcal{M}$       ▷ Source samples from the buffer
13:             Compute $\mathcal{L}_3$
14:             $\mathcal{L}_B = \mathcal{L}_3 + \mathcal{L}_2$
15:             Update network weights $\theta$
16:         for minibatch $(X_t, Y_t) \in \mathcal{D}_t$ do                             ▷ Step C
17:             Freeze the classifiers of the model $f(., \theta)$
18:             $Z_{\theta 1}, Z_{\theta 2} = f(X; \theta)$
19:             Compute discrepancy loss $\mathcal{L}_4$
20:             $\mathcal{L}_C = \mathcal{L}_3 + \mathcal{L}_4$
21:             Update network weights $\theta$
22:         Unfreeze the whole model
23:         for minibatch $(X_t, Y_t) \in \mathcal{D}_t$ do                             ▷ Step A
24:             $Z_{\theta 1}, Z_{\theta 2} = f(X; \theta)$
25:             Compute $\mathcal{L}_1$
26:             Sample a minibatch $(X', Y', Z''_{\theta 1}) \in \mathcal{M}$   ▷ Source samples from the buffer
27:             $Z'_{\theta 1}, Z'_{\theta 2} = f(X'; \theta)$
28:             Compute $\mathcal{L}_3$
29:             $\mathcal{L}_A = \mathcal{L}_5 = \mathcal{L}_1 + \mathcal{L}_3$
30:             Update network weights $\theta$
31:     Add samples, labels, and logits $(X, Y, Z_\theta)$ to the buffer $\mathcal{M}$ using reservoir sampling
32: return model $f(; \theta)$
```

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed s strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers/distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

## REFERENCES

1. Zaidi, S.S.A., Ansari, M.S., Aslam, A., Kanwal, N., Asghar, M. and Lee, B., 2022. A survey of modern deep learning based object detection models. Digital Signal Processing, p. 103514.

2. Yaniv Taigman, Ming Yang, Marc'Aurelio Ranzato, and Lior Wolf. Deepface: Closing the gap to human-level performance in face verification. In Proceedings of the IEEE conference on computer vision and pattern recognition, pp. 1701-1708, 2014

3. Yuan, X., Shi, J. and Gu, L., 2021. A review of deep learning methods for semantic segmentation of remote sensing imagery. Expert Systems with Applications, 169, p.114417.

4. LeCun, Y., Bengio, Y., and Hinton, G. (2015). Deep learning. Nature 521, 436-444. doi: 10.1038/nature14539

5. Delange, M., Aljundi, R., Masana, M., Parisot, S., Jia, X., Leonardis, A., Slabaugh, G. and Tuytelaars, T., 2021. A continual learning survey: Defying forgetting in classification tasks. IEEE Transactions on Pattern Analysis and Machine Intelligence.

6. Rolnick, D., Ahuja, A., Schwarz, J., Lillicrap, T. and Wayne, G., 2019. Experience replay for continual learning. Advances in Neural Information Processing Systems, 32.

7. Michael McCloskey and Neal J Cohen. Catastrophic interference in connectionist networks: The sequential learning problem. In Psychology of learning and motivation, volume 24, pages 109-165. Elsevier, 1989.

8. Hayes, T. L., Krishnan, G. P., Bazhenov, M., Siegelmann, H. T., Sejnowski, T. J., & Kanan, C. (2021). Replay in deep learning: Current approaches and missing biological elements. Neural Computation, 33(11), 2908-2950.

9. Li, Z., & Hoiem, D. (2017). Learning without forgetting. IEEE transactions on pattern analysis and machine intelligence, 40(12), 2935-2947.

10. Arani, E., Sarfraz, F., & Zonooz, B. (2022). Learning fast, learning slow: A general continual learning method based on complementary learning system. arXiv preprint arXiv:2201.12604 .

11. Jeeveswaran, K., Kathiresan, S., Varma, A., Magdy, O., Zonooz, B., & Arani, E. (2022). A Comprehensive Study of Vision Transformers on Dense Prediction Tasks. arXiv preprint arXiv:2201.08683.

12. German I Parisi, Ronald Kemker, Jose L Part, Christopher Kanan, and Stefan Wermter. Continual lifelong learning with neural networks: A review. Neural Networks, 113:54-71, 2019.

13. James Kirkpatrick, Razvan Pascanu, Neil Rabinowitz, Joel Veness, Guillaume Desjardins, Andrei A Rusu, Kieran Milan, John Quan, Tiago Ramalho, Agnieszka Grabska-Barwinska, et al. Overcoming catastrophic forgetting in neural networks. Proceedings of the national academy of sciences, 114(13) :3521-3526, 2017.

14. Friedemann Zenke, Ben Poole, and Surya Ganguli. Continual learning through synaptic intelligence. In International Conference on Machine Learning, pp. 3987-3995. PMLR, 2017.

15. Andrei A Rusu, Neil C Rabinowitz, Guillaume Desjardins, Hubert Soyer, James Kirkpatrick, Koray Kavukcuoglu, Razvan Pascanu, and Raia Hadsell. Progressive neural networks. arXiv preprint arXiv:1606.04671, 2016.

16. Roger Ratcliff. Connectionist models of recognition memory: constraints imposed by learning and forgetting functions. Psychological review, 97(2):285, 1990.

17. Sylvestre-Alvise Rebuffi, Alexander Kolesnikov, Georg Sperl, and Christoph H Lampert. icarl: Incremental classifier and representation learning. In Proceedings of the IEEE conference on Computer.

18. Vision and Pattern Recognition, pp. 2001-2010, 2017. David Lopez-Paz and Marc'Aurelio Ranzato. Gradient episodic memory for continual learning. Advances in neural information processing systems, 30, 2017.

19. Bhat, P., Zonooz, B., & Arani, E. (2022). Consistency is the key to further mitigating catastrophic forgetting in continual learning.

20. Van de Ven, G. M., & Tolias, A. S. (2019). Three scenarios for continual learning. arXiv preprint arXiv:1904.07734.

21. Caccia, L., Aljundi, R., Asadi, N., Tuytelaars, T., Pineau, J., & Belilovsky, E. (2022). New insights on reducing abrupt representation change in online continual learning. arXiv preprint arXiv:2203.03798.

22. Aljundi, R., Chakravarty, P., & Tuytelaars, T. (2017). Expert gate: Lifelong learning with a network of experts. In Proceedings of the IEEE Conference on Computer Vision and Pattern Recognition (pp. 3366-3375).

23. Fernando, C., Banarse, D., Blundell, C., Zwols, Y., Ha, D., Rusu, A. A., ... & Wierstra, D. (2017). Pathnet: Evolution channels gradient descent in super neural networks. arXiv preprint arXiv:1701.08734.

24. Farajtabar, M., Azizan, N., Mott, A., & Li, A. (2020, June). Orthogonal gradient descent for continual learning. In International Conference on Artificial Intelligence and Statistics (pp. 3762-3773). PMLR.

25. Davari, M., Asadi, N., Mudur, S., Aljundi, R., & Belilovsky, E. (2022). Probing Representation Forgetting in Supervised and Unsupervised Continual Learning. In Proceedings of the IEEE/CVF Conference on Computer Vision and Pattern Recognition (pp. 16712-16721).

26. Qing Yu and Kiyoharu Aizawa. Unsupervised out-of-distribution detection by maximum classifier discrepancy. In Proceedings of the IEEE/CVF International Conference on Computer Vision, pp. 9518-9526, 2019.

27. Kuniaki Saito, Kohei Watanabe, Yoshitaka Ushiku, and Tatsuya Harada. Maximum classifier discrepancy for unsupervised domain adaptation. In Proceedings of the IEEE conference on computer vision and pattern recognition, pp. 3723-3732, 2018.

28. Fangrui Lv, Jian Liang, Shuang Li, Bin Zang, Chi Harold Liu, Ziteng Wang, and Di Liu. Causality inspired representation learning for domain generalization. In Proceedings of the IEEE/CVF Conference on Computer Vision and Pattern Recognition, pp. 8046-8056, 2022

29. Khosla, P., Teterwak, P., Wang, C., Sarna, A., Tian, Y., Isola, P., ... & Krishnan, D. (2020). Supervised contrastive learning. Advances in Neural Information Processing Systems, 33, 18661-18673.

30. Vitter, J. S. (1985). Random sampling with a reservoir. ACM Transactions on Mathematical Software (TOMS), 11(1), 37-57.

31. Bhat, Prashant Shivaram, Bahram Zonooz, and Elahe Arani. "Task Agnostic Representation Consolidation: a Self-supervised based Continual Learning Approach." Conference on Lifelong Learning Agents. PMLR, 2022.

32. Sarfraz, Fahad, Elahe Arani, and Bahram Zonooz. "SYNERgy between SYNaptic consolidation and Experience Replay for general continual learning." arXiv preprint arXiv:2206.04016 (2022).

33. Arani, Elahe, Fahad Sarfraz, and Bahram Zonooz. "Noise as a resource for learning in knowledge distillation." Proceedings of the IEEE/CVF Winter Conference on Applications of Computer Vision. 2021.

34. F. Sarfraz, E. Arani and B. Zonooz, "Knowledge Distillation Beyond Model Compression," 2020 25th International Conference on Pattern Recognition (ICPR), 2021, pp. 6136-6143, doi: 10.1109/ICPR48806.2021.9413016.

35. Iqbal, Haris, et al. "AI-Driven Road Maintenance Inspection v2: Reducing Data Dependency & Quantifying Road Damage." arXiv preprint arXiv:2210.03570 (2022).

36. Bhat, Prashant, Elahe Arani, and Bahram Zonooz. "Distill on the Go: Online knowledge distillation in self-supervised learning." Proceedings of the IEEE/CVF Conference on Computer Vision and Pattern Recognition. 2021.

**Claims**

1. A computer-implemented method for domain incremental continual learning in an artificial neural network architecture, wherein said artificial neural network architecture is trained using image data from a camera mounted to a driving vehicle, and wherein said architecture comprises:

   - a memory buffer (D) for holding previous task samples;
   - an encoder (g); and
   - two classifiers (c1, c2)

   wherein the method **comprises:**

   - processing the image data to representations using said encoder (g);
   - projecting the representations from the encoder to class data distribution using the two classifiers (c1, c2) ;
   - counteracting representation drift in said artificial neural network architecture in continual learning using maximum discrepancy loss between the two classifiers.

2. The method according to claim 1, comprising the use of a loss based on metric learning so that the model learns to recognize features within the image data that generalize across mutually different domains.

3. The method, wherein mutually different domains are traffic signs in mutually different geographical areas, such as mutually different countries.

4. The method according to any one of claims 1-3, wherein the model is optimized on one task at a time for mutually different domains, wherein inference is performed on all encountered tasks.

5. The method according to claim 4, wherein the step of optimizing comprises keeping the weights of the encoder and two classifiers within a predefined range from the value of said weights as determined for previous task samples in said memory buffer.

6. The method according to any one of claims 1-5, comprising:

   - tightening decision boundaries around the previous task samples such that there is increased, such as maximized, disagreement between the two classifiers on the classification of new samples, wherein said boundaries are tightened by adjusting the weights of the classifiers while fixing the weights of the encoder.

7. The method according to any one of claims 1-6, comprising:

   - reducing, such as minimizing, the discrepancy between predictions of the model by fixing the weights of the classifiers and adjusting the weights of the encoder such that the two classifiers agree on their vector outputs.

8. A computer-implemented method for training a continual learning artificial neural network model, for sequential tasks, comprising an encoder and two classifiers,

   wherein the model is trained on a plurality sequential tasks, with visual data being received from a vehicle mounted camera becoming increasingly available over time, wherein during each task, the model is presented with task-specific samples of the data and corresponding labels are drawn from a distribution,
   the method comprises adjusting the model on one task at a time and wherein inference is performed on all tasks previously encountered by said model, and
   wherein the method uses discrepancy loss between the two classifiers to regulate encoder and classifier weights adjustment so that the model adapts a representation cluster of samples from new tasks according to the clusters of previously learned tasks such that the model is suitable for a domain incremental learning scenario, where tasks have shifting input distributions while the labels and/or classes remain the same.

9. The method according to any one of claims 1-8, wherein the method comprises a step C, namely teaching the encoder (g) to extract representations of new task samples that are consistent with the representations learned for previous tasks, and wherein said teaching comprises freezing the parameters of the two classifiers (c1, c2) while training the encoder (g) to predict representations such that the two classifiers produce substantially the same predictions.

10. The method according to any one of claims 1-9, wherein comprises a step B, namely the sharpening of decision boundaries around the samples from a previous task by encouraging the two classifiers and to have different predictions for samples from the new task, wherein during the sharpening of decision boundaries the parameters of the encoder (g) are frozen.

11. The method according to any one of claims 1-10, wherein the method comprises a step A, wherein the encoder (g) and the two classifiers (c1, c2) are trained to more accurately predict the class labels for the new task samples, wherein a consistency loss is applied to the stored samples in the memory buffer (D) to solidify knowledge of past tasks.

12. The method according to claims 1 and 9-11, and wherein the method involves consecutively cycling through steps B, C and A, in that order.

13. A data processing apparatus comprising means for carrying out the method of any one of claims 1-12.

**14.** A computer program product comprising instructions which, when the program is executed by a computer, cause the computer to carry out the method of any one of claims 1-12.

**15.** An at least partially autonomous driving system comprising at least one camera designed for providing a feed of image data, and a computer preprogrammed for implementing the method according to any one of claims 1-12.

Fig. 1

Europäisches
Patentamt

European
Patent Office

Office européen
des brevets

# EUROPEAN SEARCH REPORT

Application Number

EP 23 16 2194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUNIAKI SAITO ET AL: "Maximum Classifier Discrepancy for Unsupervised Domain Adaptation", ARXIV.ORG, CORNELL UNIVERSITY LIBRARY, 201 OLIN LIBRARY CORNELL UNIVERSITY ITHACA, NY 14853, 7 December 2017 (2017-12-07), XP081314095, * abstract * * figures 1-3 * * page 1, paragraph 1 – page 4, paragraph 3.3 * * page 6, paragraph 4.2 – page 8, paragraph 6 * * page 11 * | 1-15 | INV. G06N3/045 G06N3/084 G06N3/09 G06N3/096 G06N3/094 |
| A | DAVID ROLNICK ET AL: "Experience Replay for Continual Learning", ARXIV.ORG, CORNELL UNIVERSITY LIBRARY, 201 OLIN LIBRARY CORNELL UNIVERSITY ITHACA, NY 14853, 28 November 2018 (2018-11-28), XP081041990, * abstract * * page 1 – page 2 * | 1-15 | |
| | | | TECHNICAL FIELDS SEARCHED (IPC) |
| | | | G06N |
| A | LIU YU ET AL: "More Classifiers, Less Forgetting: A Generic Multi-classifier Paradigm for Incremental Learning", 23 August 2020 (2020-08-23), 16TH EUROPEAN CONFERENCE – COMPUTER VISION – ECCV 2020, PAGE(S) 699 – 716, XP047583405, * abstract * * page 699, paragraph 1 – page 706, paragraph 3.2 * | 1-15 | |

The present search report has been drawn up for all claims

| Place of search | Date of completion of the search | Examiner |
|---|---|---|
| The Hague | 3 August 2023 | Keresztury, Bence |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZAIDI, S.S.A. ; ANSARI, M.S. ; ASLAM, A. ; KANWAL, N. ; ASGHAR, M. ; LEE, B.** A survey of modern deep learning based object detection models. *Digital Signal Processing,* 2022, 103514
- **YANIV TAIGMAN ; MING YANG ; MARC'AURELIO RANZATO ; LIOR WOLF.** Deepface: Closing the gap to human-level performance in face verification. *Proceedings of the IEEE conference on computer vision and pattern recognition,* 2014, 1701-1708
- **YUAN, X. ; SHI, J. ; GU, L.** A review of deep learning methods for semantic segmentation of remote sensing imagery. *Expert Systems with Applications,* 2021, vol. 169, 114417
- **LECUN, Y. ; BENGIO, Y. ; HINTON, G.** Deep learning. *Nature,* 2015, vol. 521, 436-444
- **DELANGE, M. ; ALJUNDI, R. ; MASANA, M. ; PARISOT, S. ; JIA, X. ; LEONARDIS, A. ; SLABAUGH, G. ; TUYTELAARS, T.** A continual learning survey: Defying forgetting in classification tasks. *IEEE Transactions on Pattern Analysis and Machine Intelligence,* 2021
- **ROLNICK, D. ; AHUJA, A. ; SCHWARZ, J. ; LILLICRAP, T. ; WAYNE, G.** Experience replay for continual learning. *Advances in Neural Information Processing Systems,* 2019, vol. 32
- Catastrophic interference in connectionist networks: The sequential learning problem. **MICHAEL MCCLOSKEY ; NEAL J COHEN.** Psychology of learning and motivation. Elsevier, 1989, vol. 24, 109-165
- **HAYES, T. L. ; KRISHNAN, G. P. ; BAZHENOV, M. ; SIEGELMANN, H. T. ; SEJNOWSKI, T. J. ; KANAN, C.** Replay in deep learning: Current approaches and missing biological elements. *Neural Computation,* 2021, vol. 33 (11), 2908-2950
- **LI, Z. ; HOIEM, D.** Learning without forgetting. *IEEE transactions on pattern analysis and machine intelligence,* 2017, vol. 40 (12), 2935-2947
- **ARANI, E. ; SARFRAZ, F. ; ZONOOZ, B.** Learning fast, learning slow: A general continual learning method based on complementary learning system. *arXiv preprint arXiv:2201.12604,* 2022
- **JEEVESWARAN, K. ; KATHIRESAN, S. ; VARMA, A. ; MAGDY, O. ; ZONOOZ, B. ; ARANI, E.** A Comprehensive Study of Vision Transformers on Dense Prediction Tasks. *arXiv preprint arXiv:2201.08683,* 2022

- **GERMAN I PARISI ; RONALD KEMKER ; JOSE L PART ; CHRISTOPHER KANAN ; STEFAN WERMTER.** Continual lifelong learning with neural networks: A review. *Neural Networks,* 2019, vol. 113, 54-71
- **JAMES KIRKPATRICK ; RAZVAN PASCANU ; NEIL RABINOWITZ ; JOEL VENESS ; GUILLAUME DESJARDINS ; ANDREI A RUSU ; KIERAN MILAN ; JOHN QUAN ; TIAGO RAMALHO ; AGNIESZKA GRABSKA-BARWINSKA et al.** Overcoming catastrophic forgetting in neural networks. *Proceedings of the national academy of sciences,* 2017, vol. 114 (13), 3521-3526
- **FRIEDEMANN ZENKE ; BEN POOLE ; SURYA GANGULI.** Continual learning through synaptic intelligence. *International Conference on Machine Learning,* 2017, 3987-3995
- **ANDREI A RUSU ; NEIL C RABINOWITZ ; GUILLAUME DESJARDINS ; HUBERT SOYER ; JAMES KIRKPATRICK ; KORAY KAVUKCUOGLU ; RAZVAN PASCANU ; RAIA HADSELL.** Progressive neural networks. *arXiv preprint arXiv:1606.04671,* 2016
- **ROGER RATCLIFF.** Connectionist models of recognition memory: constraints imposed by learning and forgetting functions. *Psychological review,* 1990, vol. 97 (2), 285
- **SYLVESTRE-ALVISE REBUFFI ; ALEXANDER KOLESNIKOV ; GEORG SPERL ; CHRISTOPH H LAMPERT.** icarl: Incremental classifier and representation learning. *Proceedings of the IEEE conference on Computer*
- **DAVID LOPEZ-PAZ ; MARC'AURELIO RANZATO.** Gradient episodic memory for continual learning. *Advances in neural information processing systems,* 2017, vol. 30
- **BHAT, P. ; ZONOOZ, B. ; ARANI, E.** *Consistency is the key to further mitigating catastrophic forgetting in continual learning,* 2022
- **VAN DE VEN, G. M. ; TOLIAS, A. S.** Three scenarios for continual learning. *arXiv preprint arXiv:1904.07734,* 2019
- **CACCIA, L. ; ALJUNDI, R. ; ASADI, N. ; TUYTELAARS, T. ; PINEAU, J. ; BELILOVSKY, E.** New insights on reducing abrupt representation change in online continual learning. *arXiv preprint arXiv:2203.03798,* 2022

- **ALJUNDI, R. ; CHAKRAVARTY, P. ; TUYTE-LAARS, T.** Expert gate: Lifelong learning with a network of experts. *Proceedings of the IEEE Conference on Computer Vision and Pattern Recognition,* 2017, 3366-3375

- **FERNANDO, C. ; BANARSE, D. ; BLUNDELL, C. ; ZWOLS, Y. ; HA, D. ; RUSU, A. A. ; WIERSTRA, D.** Pathnet: Evolution channels gradient descent in super neural networks. *arXiv preprint arXiv:1701.08734,* 2017

- **FARAJTABAR, M. ; AZIZAN, N. ; MOTT, A. ; LI, A.** Orthogonal gradient descent for continual learning. *International Conference on Artificial Intelligence and Statistics,* June 2020, 3762-3773

- **DAVARI, M. ; ASADI, N. ; MUDUR, S. ; ALJUNDI, R. ; BELILOVSKY, E.** Probing Representation Forgetting in Supervised and Unsupervised Continual Learning. *Proceedings of the IEEE/CVF Conference on Computer Vision and Pattern Recognition,* 2022, 16712-16721

- **QING YU ; KIYOHARU AIZAWA.** Unsupervised out-of-distribution detection by maximum classifier discrepancy. *Proceedings of the IEEE/CVF International Conference on Computer Vision,* 2019, 9518-9526

- **KUNIAKI SAITO ; KOHEI WATANABE ; YOSHITAKA USHIKU ; TATSUYA HARADA.** Maximum classifier discrepancy for unsupervised domain adaptation. *Proceedings of the IEEE conference on computer vision and pattern recognition,* 2018, 3723-3732

- **FANGRUI LV ; JIAN LIANG ; SHUANG LI ; BIN ZANG ; CHI HAROLD LIU ; ZITENG WANG ; DI LIU.** Causality inspired representation learning for domain generalization. *Proceedings of the IEEE/CVF Conference on Computer Vision and Pattern Recognition,* 2022, 8046-8056

- **KHOSLA, P. ; TETERWAK, P. ; WANG, C. ; SARNA, A. ; TIAN, Y. ; ISOLA, P. ; KRISHNAN, D.** Supervised contrastive learning. *Advances in Neural Information Processing Systems,* 2020, vol. 33, 18661-18673

- **VITTER, J. S.** Random sampling with a reservoir. *ACM Transactions on Mathematical Software (TOMS),* 1985, vol. 11 (1), 37-57

- **BHAT, PRASHANT SHIVARAM ; BAHRAM ZONOOZ ; ELAHE ARANI.** Task Agnostic Representation Consolidation: a Self-supervised based Continual Learning Approach. *Conference on Lifelong Learning Agents,* 2022

- **SARFRAZ, FAHAD ; ELAHE ARANI ; BAHRAM ZONOOZ.** SYNERgy between SYNaptic consolidation and Experience Replay for general continual learning. *arXiv preprint arXiv:2206.04016,* 2022

- **ARANI, ELAHE ; FAHAD SARFRAZ ; BAHRAM ZONOOZ.** Noise as a resource for learning in knowledge distillation. *Proceedings of the IEEE/CVF Winter Conference on Applications of Computer Vision,* 2021

- **F. SARFRAZ ; E. ARANI ; B. ZONOOZ.** Knowledge Distillation Beyond Model Compression. *2020 25th International Conference on Pattern Recognition (ICPR),* 2021, 6136-6143

- **IQBAL, HARIS et al.** AI-Driven Road Maintenance Inspection v2: Reducing Data Dependency & Quantifying Road Damage. *arXiv preprint arXiv:2210.03570,* 2022

- **BHAT, PRASHANT ; ELAHE ARANI ; BAHRAM ZONOOZ.** Distill on the Go: Online knowledge distillation in self-supervised learning. *Proceedings of the IEEE/CVF Conference on Computer Vision and Pattern Recognition,* 2021